(19) Europäisches Patentamt

European Patent Office

Office européen des brevets

(11) Veröffentlichungsnummer : **0 342 530 B1**

(12) **EUROPÄISCHE PATENTSCHRIFT**

(45) Veröffentlichungstag der Patentschrift :
**15.01.92 Patentblatt 92/03**

(51) Int. Cl.⁵ : **H04J 3/06,** H04Q 11/04,
H04H 7/00, H04L 25/36

(21) Anmeldenummer : **89108529.2**

(22) Anmeldetag : **11.05.89**

(54) **Koppelfeld für digitale Audiosignale.**

Verbunden mit 89905676.6/0374220
(europäische
Anmeldenummer/Veröffentlichungsnummer)
durch Entscheidung vom 12.12.90.

(30) Priorität : **11.05.88 AT 1234/88**

(43) Veröffentlichungstag der Anmeldung :
**23.11.89 Patentblatt 89/47**

(45) Bekanntmachung des Hinweises auf die
Patenterteilung :
**15.01.92 Patentblatt 92/03**

(84) Benannte Vertragsstaaten :
**AT BE CH DE ES FR GB IT LI NL SE**

(56) Entgegenhaltungen :
**EP-A- 0 076 505**
**EP-A- 0 251 854**
**DE-A- 3 511 352**
**GB-A- 1 479 313**

(73) Patentinhaber : **Siemens Aktiengesellschaft
Österreich
Siemensstrasse 88 - 92
A-1210 Wien (AT)**
Patentinhaber : **SIEMENS
AKTIENGESELLSCHAFT
Wittelsbacherplatz 2
W-8000 München 2 (DE)**

(72) Erfinder : **Mitterbauer, Raimund, Dr. Dipl.-Ing.
Lessingstrasse 4
A-3100 St. Pölten (AT)**
Erfinder : **Kicker, Agust, Dipl.-Ing.
Dr. Schober-Strasse 59
A-1130 Wien (AT)**
Erfinder : **Kraker, Alfred, Ing.
Kollergasse 17
A-1030 Wien (AT)**
Erfinder : **Neuhold, Günter, Dipl.-Ing.
Hauptplatz 18
A-2460 Bruck a.d. Leitha (AT)**

(74) Vertreter : **Atzwanger, Richard, Dipl.-Ing.
Mariahilfer Strasse 1c
A-1060 Wien (AT)**

**Beschreibung**

Die Erfindung betrifft ein Koppelfeld für digitale Audiosignale, die in Paralleldarstellung über ankommende Datenbusse in individuellen Abtasttaktfolgen mit voneinander abweichenden Abtastfrequenzen den Koppelfeld-Eingängen zugeführt und über beliebig vermittelbare Koppelfeld-Ausgänge an gleichartige abgehende Datenbusse in gleicher Paralleldarstellung übertragen werden, wobei für die Schaltvorgänge innerhalb des Koppelfeldes ein eigener Koppelfeld-Abtasttakt vorgesehen ist.

Bei Vermittlungseinrichtungen für digitalisierte Audiosignale im Tonstudiobereich kann es vorkommen, daß die PCM-Signale an den Eingängen des Koppelfeldes unterschiedliche Abtastraten aufweisen. Dies führt besonders dann zu Problemen, wenn der Koppler an sich eine fixe Abtastrate vorgeben würde. Bei Systemen mit großer Kanalanzahl erscheint es günstig, den selben Koppler für alle Kanäle zu benützen, da damit der Hardwareaufwand für das eigentliche Koppelfeld gegenüber mehreren Teilkopplern unterschiedlicher "Vermittlungsrate" klein gehalten werden kann. Es stellt sich somit die Aufgabe, beim Verkoppeln von pulscodemodulierten Signalen die Abtastrate exakt beizubehalten, d.h. daß die individuelle Abtastfrequenz, mit der ein Signal dem Eingang des Koppelfeldes zugeführt wird, auch bei dem vom jeweils angekoppelten Ausgang abgenommenen Signal erhalten bleibt. Würden sich nämlich die Abtastraten innerhalb kürzerer Zeitintervalle ändern, so wäre dies mit einer Verschlechterung der Qualität des nach der Digital- Analog-Umwandlung rekonstruierten Signales verbunden.

In der US-PS 3,868,481 ist ein Zeitmultiplex-Durchschaltesystem (Koppelfeld) für Digitalsignale beschrieben, das mit unterschiedlichen Bit-Raten arbeitet, die sich durch unterschiedliche Wortlängen (6 oder 8 Bit je Byte) und unterschiedliche Zusammenfassungen von Kanälen (oder Worten) auf 6, 12 oder 24 Kanäle je Rahmen (Frame) ergeben. Die Abtastrate ist jedoch bei diesem System für alle Kanäle gleich, was die naturgemäße Voraussetzung dafür ist, daß diese Kanäle zu einem übergeordneten Kanal (Highway) zusammengefaßt werden können. Die ankommenden Signale werden durch Eingangseinheiten auf ein einheitliches Byte- und Rahmen-Format konvertiert, das dann dem Koppelfeld angeboten wird.

Die Abtastrate der abgehenden Signale ist synchron mit dem mit einem rationalen Faktor multiplizierten Kopplertakt. Dieser muß entsprechend gewählt werden, um die Gesamtheit der mit z.B. 8 kHz abgetasteten Signale vermitteln zu können. Durch geringe Frequenzunterschiede kommt es zu einem periodischen Datenverlust, der durch Rücksetzen von Pufferspeichern (Elastic Buffer) ausgeglichen wird. Für Signale mit stark voneinander abweichenden Eingangs- Abtastfrequenzen, wie dies beim erfindungsgemäßen Koppelfeld möglich ist, ist das durch die genannte US-PS bekannte System nicht geeignet.

Die Erfindung hat sich die Aufgabe gestellt, die Vermittlung von Audiosignalen mit unterschiedlichen Abtastraten mit Hilfe eines einzigen Koppelfeldes mit minimalem Aufwand herzustellen. Erfindungsgemäß wird dies dadurch erzielt, daß zur Erzielung einer Übereinstimmung der Abtasttaktfolgen an den Koppelfeld-Ausgängen mit denen an den jeweils zugeordneten Koppelfeld-Eingängen der Koppelfeld-Abtasttakt eine Abtastfrequenz aufweist, die größer ist als alle individuellen Abtastfrequenzen und daß einerseits an den Koppelfeld-Eingängen je eine Eingangs-Zwischenspeicherkette mit je einer zugeordneten Taktvergleichsschaltung zur Gewinnung je eines Interferenzsignales, das ein Maß für die Phasen- bzw. Frequenzdifferenz zwischen der individuellen Abtastfrequenz und der Koppelfeld-Abtastfrequenz ist, vorgesehen ist, wobei die Interferenzsignale während der für die Übertragung von Audiodaten nicht benötigten Koppelfeld-Abtastperioden, die sich zufolge der gegenüber allen individuellen Abtastfrequenzen erhöhten Koppelfeld-Abtastfrequenz ergeben, in codierter Form übertragen werden und daß anderseits an den Koppelfeld-Ausgängen je eine der Rückgewinnung der jeweiligen individuellen Abtastfrequenz dienende, in Abhängigkeit von dem zugeordneten Interferenzsignal gesteuerte Taktregenerationsschaltung mit je einer zugeordneten Ausgangs-Zwischenspeicherkette vorgesehen ist und daß die Interferenzsignale aus den Taktvergleichsschaltungen an den zugehörigen Koppelfeld-Eingängen in codierter Form in die Datenflüsse zu den zugeordneten Koppelfeld-Ausgängen eingekoppelt werden und nach Auskopplung aus den Datenflüssen an den Koppelfeld-Ausgängen dort den Taktregenerationsschaltungen zugeführt werden.

Durch das bei der erfindungsgemäßen Schaltung angewendete Vermittlungsprinzip ergibt sich die Notwendigkeit, alle von den Eingängen stammenden, bereits mit der Koppelfeld-Abtastfrequenz synchronisierten Daten (inclusive die Interferenzsignale) während einer Koppelfeld-Abtastperiode zwischenzuspeichern und im selben Zeitintervall die Koppelfeld-Ausgänge mit den entsprechenden Daten zu versorgen. Dies wird nach einem weiteren Merkmal der Erfindung dadurch erzielt, daß die für die Zwischenspeicherung der Daten innerhalb des Koppelfeldes vorgesehenen Speicherplätze einander zugeordnet als Speicherplatzpaare ausgeführt sind, deren Speicherplätze abwechselnd mit den Daten aufeinanderfolgender Abtastperioden belegt werden, derart, daß in den einen Speicherplatz eines Speicherplatzpaares die Daten der gegenwärtigen Abtastperiode eingeschrieben werden, während zugleich die Daten der vorhergehenden Abtastperiode aus dem anderen zugeordneten Speicherplatz ausgelesen werden. Nach jeder Koppelfeld-Abtastperiode werden die Funktionen der beiden Speicherplätze vertauscht, so daß die Kontinuität von Ein- und Ausgabe gewahrt bleibt und weiters gegenüber einer Ausführung mit je einem einzigen Speicherplatz eine Zeitersparnis von 50% bzw. eine Verdopplung der möglichen Kanalanzahl bei gleicher Koppelfeld-Abtastperiodendauer erreicht werden kann.

Als Ausführungsbeispiel der Erfindung ist in der Fig. 1 der Zeichnung ein Koppelfeld KF mit den an seinen Ein- und Ausgängen vorgesehenen Schaltungen schematisch dargestellt. Fig. 2 zeigt detailliert den Aufbau einer der an den Koppelfeld-Eingängen vorgesehenen Schaltungen, wobei ein für das Verständnis der Funktion dieser Schaltung erforderliches Impulsdiagramm in Fig. 3 dargestellt ist. In Fig. 4 ist der Aufbau einer der an den Koppelfeld-Ausgängen vorgesehenen Schaltungen gezeigt.

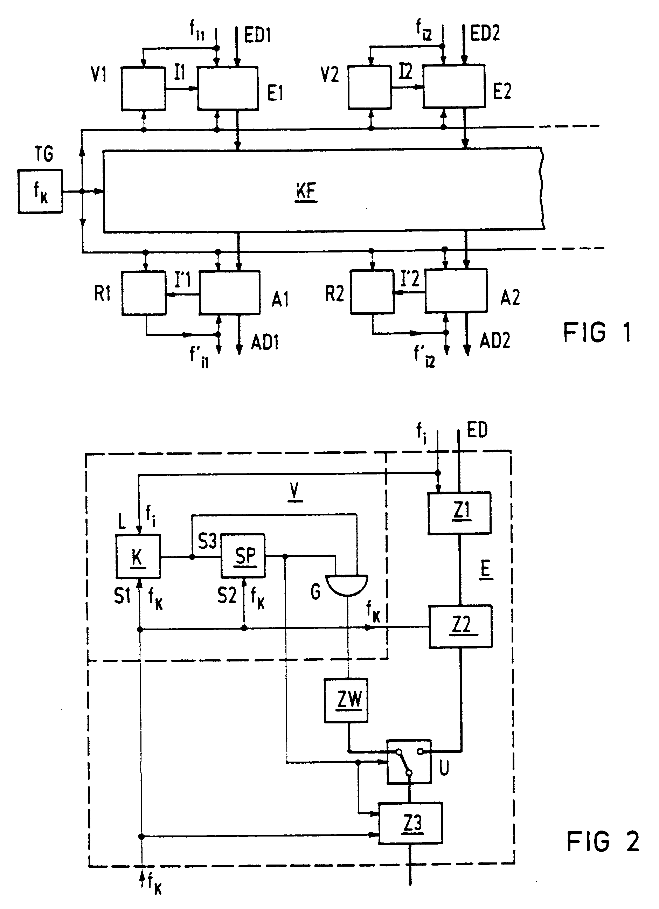

Das Koppelfeld KF dient zur Herstellung beliebiger Verbindungen zwischen je einem der Koppelfeld-Eingänge und je einem der Koppelfeld-Ausgänge. Von diesen sind in Fig. 1 jeweils nur zwei Eingänge und zwei Ausgänge dargestellt. Die Eingangssignale werden von in der Zeichnung nicht dargestellten Analog-Digital-Wandlern über z.B. 20-Bit-Eingangs-Datenbusse ED1, ED2... mit je einer individuellen Abtastfrequenz $f_{i1}$, $f_{i2}$... in Paralleldarstellung binär codiert angeliefert. Die Eingangs-Datenbusse ED1, ED2... sind ebenso wie die Ausgangs-Datenbusse AD1, AD2... durch je eine stark ausgezogene und eine schwach ausgezogene Linie dargestellt. Hierbei symbolisieren die stark ausgezogenen Linien die die codierten Daten übertragenden Leitungsbündel, während die schwach ausgezogenen Linien jeweils eine einzelne Leitung darstellen, über die der für die codierten Daten zuständige Abtasttakt mit den individuellen Abtastfrequenzen $f_{i1}$, $f_{i2}$ an die dargestellten beiden ersten Eingänge übertragen wird. Von irgendwelchen anderen Eingängen stammende Daten werden vom Koppelfeld KF mit deren individuellen Abtastfrequenzen $f'_{i1}$, $f'_{i2}$ an die beiden ersten Ausgänge übertragen. Die Ziffernindices bei den Bezeichnungen für die Abtastfrequenzen beziehen sich nur auf die Bezifferungen der Ein- bzw. Ausgänge. Die Apostrophen $f'_i$ besagen, daß die betreffenden Frequenzen an den Ausgängen abgenommen werden.

Innerhalb des Koppelfeldes findet eine zentral gesteuerte gemeinsame Vermittlung aller Eingangssignale statt, was unter Beibehaltung der individuellen Abtastfrequenzen $f_{i1}$... der einzelnen Eingangssignale nicht möglich wäre. Demgemäß werden an den Koppelfeld-Eingängen die Eingangssignale von ihren individuellen Abtastfrequenzen $f_{i1}$, $f_{i2}$... auf gleich codierte Signale umgesetzt, die eine für das ganze Koppelfeld KF einheitliche Koppelfeld-Abtastfrequenz $f_K$ aufweisen. An den Koppelfeld-Ausgängen werden die über das Koppelfeld KF vermittelten Signale wieder auf die ursprünglichen Abtastfrequenzen $f'_{i1}$, $f'_{i2}$... umgesetzt.

Für die Zwischenspeicherung der Daten innerhalb des Koppelfeldes KF sind als Speicherplatzpaare ausgeführte Speicher vorgesehen, deren Speicherplätze abwechselnd mit den Daten aufeinanderfolgender Abtastperioden belegt werden. Die Vorgangsweise bei den Belegungen ist derart, daß in den einen Speicherplatz eines Speicherplatzpaares die Daten der gegenwärtigen Abtastperiode eingeschrieben werden, während zugleich die Daten der vorhergehenden Abtastperiode aus dem anderen zugeordneten Speicherplatz ausgelesen werden. Bei der nächsten Abtastperiode wechseln die Funktionen der beiden Speicherplätze.

Die Umsetzungen der individuellen Abtastfrequenzen $f_{i1}$... in die Koppelfeld-Abtastfrequenz $f_K$ an den Koppelfeld-Eingängen und die Rück-Umsetzungen in die individuellen Abtastfrequenzen $f'_{i1}$... an den Koppelfeld-Ausgängen werden im folgenden an Hand der Fig. 1 erläutert :

An jedem Koppelfeld-Eingang ist je eine Eingangs-Zwischenspeicherkette E1, E2... vorgesehen, der je eine Taktvergleichsschaltung V1, V2... zugeordnet ist. Die von verschiedenen, in der Zeichnung nicht dargestellten Analog-Digital-Umsetzern über die Eingangs- Datenbusse ED1, ED2... gelieferten Eingangssignale weisen z.T. sehr unterschiedliche Abtastfrequenzen $f_{i1}$, $f_{i2}$... auf. Jede der Eingangs-Zwischenspeicherketten weist drei Digitalspeicher auf. Bei jedem der mit der individuellen Frequenz $f_{i1}$, $f_{i2}$... ankommenden Abtasttakte wird die zugehörige Dateninformation in den ersten Speicher eingespeichert. Zugleich wird der individuelle Abtasttakt $f_{i1}$, $f_{i2}$... in der zugeordneten Taktvergleichsschaltung V1, V2... mit dem in einem Taktgenerator TG erzeugten Koppelfeld- Abtasttakt $f_K$ verglichen. Da die Koppelfeld-Abtastfrequenz $f_K$ größer ist als jede nur mögliche individuelle Abtastfrequenz $f_{i1}$, $f_{i2}$... kommen nur Frequenzabweichungen eines Vorzeichens zustande, die durch ein Interferenzsignal I1, I2... abgebildet werden. Die in dem ersten Zwischenspeicher eingegebenen Daten werden einem zweiten Zwischenspeicher Z2 übertragen, aus dem sie im Takt der Koppelfeld-Abtastfrequenz $f_K$ ausgelesen werden. Ein dritter Zwischenspeicher dient, wie später an Hand der Fig. 2 erläutert wird, zur Einfügung der ebenfalls in binär codierter Form dargestellten Interferenzsignale in den Datenstrom. Somit enthält jeder von einem Koppelfeld-Eingang zu einem Koppelfeld-Ausgang vermittelte Datenstrom außer der Nutzinformation zusätzlich eine über zusätzliche Übertragungszyklen geleitete Information über die individuelle Abtastfrequenz des Eingangssignales in Form des über die Frequenzdifferenz und bzw. oder Phasenlage des individuellen Abtasttaktes $f_{i1}$, $f_{i2}$... relativ zum Koppelfeld-Abtasttakt $f_K$ Aufschluß gebenden Interferenzsignales I1, I2....

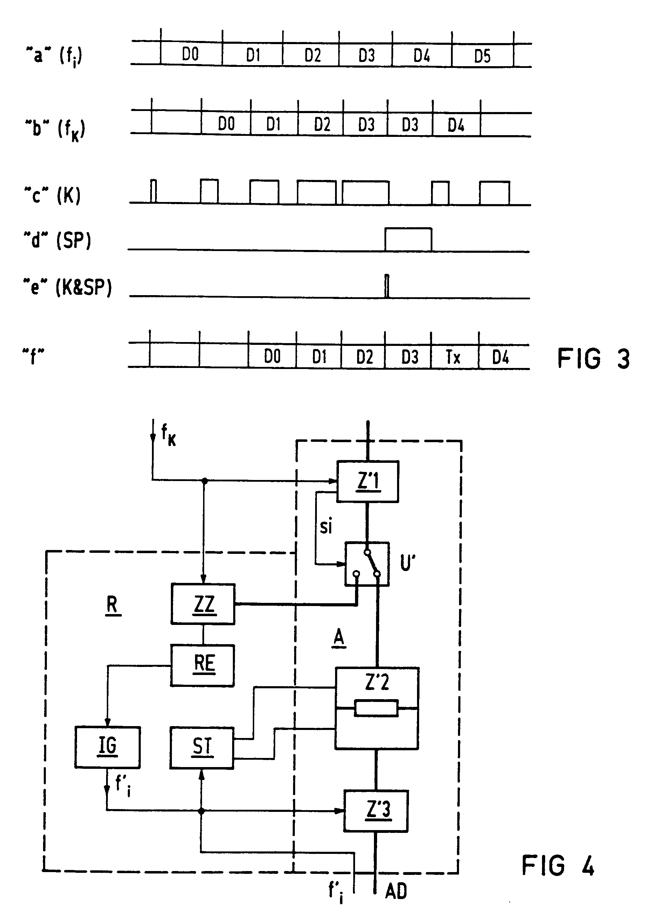

An den Koppelfeld-Ausgängen wird das Interferenzsignal I1, I2..., das aus den jeweils angeschlossenen Eingangssignalen stammt, aus den Datenflüssen ausgekoppelt und zur Regeneration des zugehörigen individuellen Abtasttaktes des Eingangssignales herangezogen. Hierzu ist auch an den Koppelfeld-Ausgängen je eine AusgangsZwischenspeicherkette A1, A2... zusammen mit einer Taktregenerationsschaltung R1, R2... vorgesehen. Der vom jeweils angeschlossenen Koppelfeld-Eingang kommende Datenstrom wird, wie später an Hand der Fig. 4 ausführlich erläutert wird, in einen ersten Zwischenspeicher mit der Koppelfeld-Abtastfrequenz $f_K$ eingeschrieben. Dort wird das Interferenzsignal I'1, I'2.... ausgelesen und der zugehörigen Taktregenerationsschaltung R1, R2... zugeführt, die mit einem regelbaren Impulsgenerator versehen ist, der mit Hilfe des Interferenzsignales auf die Erzeugung der entsprechenden individuellen Abtastfrequenz $f'_{I1}$, $f'_{I2}$... eingestellt wird, mit der einerseits die Nutzinformation aus dem letzten Zwischenspeicher der Ausgangs-Zwischenspeicherkette A1, A2... ausgelesen und in den zugehörigen Ausgangsdatenbus AD1, AD2... eingespeist wird. Andererseits werden die Abtastimpulse mit den Frequenzen $f'_{I1}$, $f'_{I2}$... als Begleitimpulse für die Ausgangsdaten den entsprechenden Leitungen der Ausgangsdatenbusse zugeführt.

Die spezielle Ausgestaltung einer an einem Koppelfeld-Eingang vorgesehenen Zwischenspeicherkette E samt zugeordneter Taktvergleichsschaltung V, die je mit strichlierten Linien umrandet sind, zeigt Fig. 2. Das über den ankommenden Eingangs-Datenbus ED angebotene Eingangssignal wird mit dem individuellen Abtasttakt $f_i$ in einen ersten Zwischenspeicher Z1 der Eingangs-Zwischenspeicherkette E eingeschrieben. Zugleich wird der individuelle Abtasttakt $f_i$ der Taktvergleichseinrichtung V zugeführt, in der eine bistabile Kippstufe K mit ihrem Löscheingang L von den Impulsen des Abtasttaktes $f_i$ beaufschlagt wird. Der Taktvergleichseinrichtung V werden weiters die vom Taktgeber TG erzeugten Impulse mit der Koppelfeld-Abtastfrequenz $f_K$ zugeführt und mit dieser Frequenz $f_K$ werden auch die Setzeingänge S1 bzw. S2 der Kippstufe K und einer Speicherstufe SP beaufschlagt. Weiters wird mit der Koppelfeld-Abtastfrequenz $f_K$ der Speicherinhalt des ersten Zwischenspeichers Z1 in den zweiten Zwischenspeicher Z2 eingelesen. Die Speicherstufe SP besitzt noch einen zweiten Setzeingang S3, der an den Ausgang der Kippstufe K angeschlossen ist. Die Speicherstufe SP wird nur dann gesetzt, wenn sowohl am Setzeingang S2 als auch am Setzeingang S3 ein Signal anliegt, d.h., wenn ein Abtastimpuls des Taktgebers TG eintrifft und zugleich die Kippstufe K gesetzt ist. Die Ausgänge der Kippstufe K und der Speicherstufe SP sind an die Eingänge eines UND-Gatters G angeschlossen, dessen Ausgang zu einem Zeitzählwerk ZW führt, das während der Dauer eines Ausgangsimpulses des Gatters G in Tätigkeit ist und an seinem Ausgang binär codierte Zeitsignale liefert, deren Quantisierungsfrequenzen unabhängig von der Koppelfeld-Abtastfrequenz sind und die von lokalen Quarzgeneratoren gleicher Frequenz stammen. Mit U ist eine in Abhängigkeit vom Ausgangssignal der Speicherstufe SP gesteuerte Umschaltevorrichtung bezeichnet, die bei Betätigung den Datenfluß vom zweiten Zwischenspeicher Z2 zu einem dritten Zwischenspeicher Z3 unterbricht und dafür den Eingang des Zwischenspeichers Z3 mit dem Ausgang des Zeitzählwerkes ZW verbindet.

Der Umstand, daß die Koppelfeld-Abtastfrequenz $f_K$ größer ist als jede der individuellen Abtastfrequenzen $f_i$, bedingt, daß es für jede dieser individuellen Abtastfrequenzen $f_i$ eine ganze Zahl n von am Eingang ankommenden Abtastperioden mit der Periodendauer $f_i^{-1}$ gibt, deren Gesamtdauer etwa gleich ist der Gesamtdauer einer Anzahl von (n + 1) Koppelfeld-Abtastperioden mit je einer Periodendauer $f_K^{-1}$. Als "Koinzidenz" einer Koppelfeld-Abtastperiode mit einer Eingangs-Abtastperiode wird immer der Fall bezeichnet, daß eine Koppelfeld-Abtastperiode zur Gänze innerhalb einer Eingangs-Abtastperiode liegt. Der Ausdruck "Koinzidenz" ist zwischen Anführungszeichen gesetzt, weil er keine mathematisch exakt definierte Position zwischen den Abtastperioden kennzeichnet, denn ein Koppelfeld-Abtastintervall kann sich innerhalb eines Eingangs- Abtastintervalles in verschiedenen Zeitpositionen befinden, die als Zeitdifferenz zwischen dem abschließenden Abtastimpuls eines innerhalb eines Eingangs-Abtastintervalles liegenden Koppelfeld-Abtastintervalles und dem darauffolgenden Eingangs-Abtastimpuls gemessen wird. Mit jedem aus je n Eingangs-Abtastperioden bzw. je (n + 1) Koppelfeld-Abtastperioden bestehenden Abtastzyklus, also bei jeder "Koinzidenz", wird diese die Phasenlage zwischen dem abschließenden Koppelfeld-Abtastimpuls und dem nachfolgenden Eingangs-Abtastimpuls charakterisierende Zeitdifferenz in ein codiertes Interferenzsignal umgesetzt. Da auf je n Eingangs-Abtastperioden jeweils (n + 1) Koppelfeld-Abtastperioden kommen, ergibt sich für die Signalübertragung innerhalb des Koppelfeldes KF eine gegenüber dem Eingangs-Datenstrom erhöhte Übertragungskapazität durch das Koppelfeld hindurch, die nun erfindungsgemäß zur Übertragung der codierten Interferenzsignale I1... von einem Koppelfeldeingang zum jeweils durchgeschalteten Koppelfeldausgang ausgenützt wird. Da bei jedem Abtastzyklus von je n Eingangs-Abtastperioden jeweils eine zusätzliche, für die Datenübertragung selbst nicht benötigte Koppelfeld-Abtastperiode zur Verfügung steht, wird diese zusätzliche Abtastperiode zur Übertragung des codierten Interferenzsignales herangezogen und durch ein zusätzliches "si" bezeichnetes Datenbit als zur Interferenzsignalübertragung dienende Abtastperiode markiert.

Wie dies im einzelnen geschieht, wird im folgenden anhand der Fig. 2 unter Zuhilfenahme der Diagramme der Fig. 3 erläutert :

Das erste, mit "a" bezeichnete Diagramm der Fig. 3 zeigt die Eingangs-Abtastimpulse mit der Frequenz $f_i$ ; im Zeitintervall zwischen je zwei aufeinanderfolgenden Abtastimpulsen liegt am ankommenden Eingangs-Datenbus ED das jeweils aktuelle Datenwort vor. Einige dieser Datenworte sind symbolisiert durch die Bezeichnungen D0... D5. Diese also werden mit der Frequenz $f_i$ vom Eingangs-Datenbus ED abgerufen und in den ersten Zwischenspeicher Z1 eingespeichert. Das zweite, mit "b" bezeichnete Diagramm zeigt die vom Taktgenerator TG erzeugten Impulse mit der Koppelfeld-Abtastfrequenz $f_K$. Mit dieser Frequenz $f_K$ werden die im ersten Zwischenspeicher Z1 eingeschriebenen Daten D0... ausgelesen und in den zweiten Zwischenspeicher Z2 eingeschrieben. Hierbei ergibt sich die aus dem Vergleich der Diagramme a und b ersichtliche Verschiebung der Präsenz der Daten D0... in den Zwischenspeichern Z1 und Z2.

Mit jedem Koppelfeld-Abtastimpuls ($f_K$) wird über ihren Setzeingang S1 die Kippstufe K gesetzt und mit jedem darauffolgenden Eingangs-Abtastimpuls ($f_i$) wird über den Löscheingang L die Kippstufe K zurückgesetzt. Das am Ausgang der Kippstufe K resultierende Impulsdiagramm "c" ist als drittes in Fig. 3 dargestellt. Solange die Impulse mit der individuellen Abtastfrequenz $f_i$ und die Impulse mit der Koppelfeld-Abtastfrequenz $f_K$ in abwechselnder Reihenfolge eintreffen, kommt es zu keinem eine Abtastperiode überdauernden Ausgangssignal der Kippstufe K, da sie zwar mit jedem Koppelfeld-Abtastimpuls gesetzt, jedoch innerhalb jeder Abtastperiode wieder zurückgesetzt wird. Erst dann, wenn eine Koppelfeld-Abtastperiode zur Gänze in eine Abtastperiode des Eingangssignales zu liegen kommt, wird die Speicherstufe SP gesetzt, da an ihren beiden Eingängen S2 und S3 gleichzeitig ein Signal anliegt. Die Speicherstufe SP bleibt solange gesetzt, bis der nächste Koppelfeld-Abtastimpuls über den Eingang S2 eintrifft, durch den sie zurückgesetzt wird. Dies ist im Diagramm "d" der Fig. 3 dargestellt. Während dieser Zeit wird durch Betätigung der Umschaltevorrichtung U das Zeitzählwerk ZW an den Eingang des dritten Zwischenspeichers Z3 angeschlossen, das, wie bereits erwähnt, während der Koinzidenzzeit der Ausgangssignale der Kippstufe K und der Speicherstufe SP (dargestellt im Diagramm "e" der Fig. 3) ein die Dauer der Koinzidenzzeit charakterisierendes Interferenzsignal liefert, das während der Dauer der Anschaltung des Zeitzählwerkes ZW an den Zwischenspeicher Z3 an dessen Eingang angelegt bleibt und somit zu jedem Abtastzyklus während der letzten Periode der gegenüber der Anzahl der Eingangs-Abtastperioden um eins erhöhten Abtastperioden des Koppelfeldes die Differenzzeit zwischen den beiden Abtastimpulsfolgen $f_i$ und $f_K$ mittels des Interferenzsignales an den zugeordneten Koppelfeldausgang überträgt. Die solcherart zustandekommende Abtastfolge ist in Fig. 3 im Diagramm "f" dargestellt, in dem das zur Übertragung des Interferenzsignales dienende Abtastintervall mit Tx bezeichnet ist.

In der Fig. 4 ist schließlich die Schaltung für einen Koppelfeldausgang dargestellt. Diese Schaltung besteht aus einer Ausgangs-Zwischenspeicherkette A und einer Taktregenerationsschaltung R. Die über das Koppelfeld ankommenden Daten werden im Takt der Koppelfeld-Abtastfrequenz $f_K$ in einen ersten Zwischenspeicher Z'1 eingelesen, dessen Ausgang über eine Umschaltevorrichtung U' während der Datenübertragung an einen zweiten, als Pufferspeicher wirkenden Zwischenspeicher Z'2 geschaltet ist. Während jedes Abtastintervalles Tx, das der Übertragung des Interferenzsignales dient, wird hingegen mittels des aus dem Zwischenspeicher Z'1 gewonnenen Signales si die Umschaltevorrichtung U' in der Weise betätigt, daß sie den Ausgang des Zwischenspeichers Z'1 mit dem Eingang eines in der Taktregenerationsschaltung R befindlichen Zeitzählwerkes ZZ verbindet, das durch einen Koppelfeld-Abtastimpuls aktiviert, die das während des Abtastintervalles Tx anliegende Datenwort betreffend das jeweilige Interferenzsignal decodiert und ein entsprechendes Signal an eine Regeleinrichtung RE für einen in seiner Frequenz $f'_i$ regelbaren Impulsgenerator IG liefert. Da der Impulsgenerator durch das Interferenzsignal sowohl eine Frequenzinformation über die Eingangs-Abtastfrequenz $f_i$ als auch eine Phaseninformation über die Phasendifferenz zwischen den Eingangs-Abtastimpulsen einerseits und den Koppelfeld-Abtastimpulsen anderseits zum Ende eines jeden Abtastzyklus erhält, ist eine genaue Regelung des Impulsgenerators IG möglich, die also bewirkt, daß die Impulse des Impulsgenerators IG mit der requenz $f'_i$ mit den Eingangs-Abtastimpulsen mit der Frequenz $f_i$ praktisch übereinstimmen.

Mit ST ist eine Steuerschaltung für den Pufferspeicher Z'2 bezeichnet, die eine Umsetzung der mit der Koppelfeld-Abtastfrequenz $f_K$ aus dem Zwischenspeicher Z'1 angelieferten Daten in solche Daten bewirkt, die mit der rekonstruierten individuellen 20 Abtastfrequenz $f'_i$ angeboten werden. Über einen weiteren Zwischenspeicher Z'3 werden schließlich die rekonstruierten Daten an den AusgangsDatenbus AD abgegeben.

**Patentansprüche**

1. Koppelfeld für digitale Audiosignale, die in Paralleldarstellung über ankommende Datenbusse in individuellen Abtasttaktfolgen mit voneinander abweichenden Abtastfrequenzen den Koppelfeld-Eingängen zugeführt und über beliebig vermittelbare Koppelfeld-Ausgänge an gleichartige abgehende Datenbusse in gleicher Paralleldarstellung übertragen werden, wobei für die Schaltvorgänge innerhalb des Koppelfeldes ein eigener Koppelfeld-Abtasttakt vor-gesehen ist, **dadurch gekennzeichnet,** daß zur Erzielung einer Übereinstimmung der Abtasttaktfolgen an den Koppelfeld-Ausgängen mit denen an den jeweils zugeordneten Koppelfeld-Eingängen der Koppelfeld-Abtasttakt eine Abtastfrequenz ($f_K$) aufweist, die größer ist als alle individuellen Abtastfrequenzen ($f_i$) und daß einerseits an den Koppelfeld-Eingängen je eine Eingangs-Zwischenspeicherkette (E1, E2...) mit je einer zugeordneten Taktvergleichsschaltung (V1, V2...) zur Gewinnung je eines Interferenzsignales (I1, I2...), das ein Maß für die Phasen- bzw. Frequenzdifferenz zwischen der individuellen Abtastfrequenz ($f_{i1}$, $f_{i2}$) und der Koppelfeld-Abtastfre-quenz ($f_K$) ist, vorgesehen ist, wobei die Interferenzsignale während der für die Übertragung von Audiodaten nicht benötigten Koppelfeld-Abtastperioden, die sich zufolge der gegenüber allen individuel-len Abtastfrequenzen ($f_i$) erhöhten Koppelfeld-Abtastfrequenz ($f_K$) ergeben, in codierter Form übertragen werden und daß anderseits an den Koppelfeld-Ausgängen je eine der Rückgewinnung der jeweiligen individuellen Abtastfrequenz ($f_{i1}$, $f_{i2}$) dienende, in Abhängigkeit von dem zugeordneten Interferenzsignal (I1, I2...) gesteuerte Taktregenerationsschaltung (R1, R2...) mit je einer zugeordneten Ausgangs-Zwischenspeicherkette (A1, A2...) vorgesehen ist und daß die Interferenzsignale (I1, I2...) aus den Taktvergleichsschaltungen V1, V2...) an den zugehörigen Koppelfeld-Eingängen in codierter Form in die Datenflüsse zu den zugeordneten Koppelfeld-Ausgängen eingekoppelt werden und nach Auskopplung aus den Datenflüssen an den Koppelfeld-Ausgängen dort den Taktregenerationsschaltungen R1, R2...) zugeführt werden.

2. Koppelfeld nach Anspruch 1, **dadurch gekennzeichnet,** daß die für die Zwischenspeicherung der Daten innerhalb des Koppelfeldes (KF) vorgesehenen Speicherplätze einander zugeordnet als Speicherplatzpaare ausgeführt sind, deren Speicherplätze abwechselnd mit den Daten aufeinanderfolgender Abtastperioden belegt werden, derart, daß in den einen Speicherplatz eines Speicherplatzpaares die Daten der gegenwärtigen Abtastperiode eingeschrieben werden, während zugleich die Daten der vorhergehenden Abtastperiode aus dem anderen zugeordneten Speicherplatz ausgelesen werden.

**Claims**

1. Switching network for digital audio signals which in parallel format are supplied to the switching-network inputs by means of incoming data buses in individual sampling time sequences with sampling frequencies differing from one another and are transmitted by means of switching-network outputs, which can be arranged in any way, to similar outgoing data buses in the same parallel format, whereby for the switching processes within the switching network there is provided a specific switching-network sampling time, characterized in that to attain an agreement of the sampling time sequences at the switching-network outputs with those at the respectively associated switching-network inputs the switching-network sampling time has a sampling frequency ($f_K$) which is greater than all individual sampling frequencies ($f_i$) and in that on the one hand at the switching-network inputs in each case an input intermediate storage chain (E1, E2...) with in each case an associated time comparator circuit (V1, V2...) is provided for obtaining in each case an interference signal (I1, I2...), which is a measure for the phase difference or frequency difference between the individual sampling frequency ($f_{i1}$, $f_{i2}$) and the switching-network sampling frequency ($f_K$), whereby the interference signals during the switching-network sampling periods, which are not required for the transmission of audio data and which result due to the switching-network sampling frequency ($f_K$) increased relative to all individual sampl-ing frequencies ($f_i$), are transmitted in coded form and in that on the other hand at the switching-network outputs in each case there is provided a time regeneration circuit (R1, R2...), serving to regain the respective individual sampling frequency ($f_{i1}$, $f_{i2}$) and controlled in dependence upon the associated interference signal (I1, I2...), in each case with an associated output intermediate storage chain (A1, A2...) and in that the interference signals (I1, I2...) from the time comparison circuits (V1, V2...) at the appertaining switching-network inputs are coupled in coded form into the data flows to the associated switching-network outputs and after decoupling from the data flows at the switching-network outputs are supplied there to the time regeneration circuits (R1, R2...).

2. Switching network according to claim 1, characterized in that the storage places provided for the intermediate storing of the data within the switching network (KF) are constructed associated with one another as pairs of storage places, the storage places of which are alternately occupied by the data of successive sampling periods, in such a way that the data of the present sampling period are written into one storage place of a pair of storage places, while at the same time the data of the preceding sampling period are read out from the other associated storage place.

**Revendications**

1. Champ de couplage pour des signaux audio numériques, qui sont envoyés selon une représentation en parallèle, par l'intermédiaire de bus de données d'arrivée, aux entrées du champ de couplage, selon des suites individuelles d'impulsions de cadence d'exploration avec des fréquences d'exploration qui diffèrent les unes des autres, et sont transmis par l'intermédiaire de sorties du champ de couplage, qui peuvent être commutées d'une manière quelconque, à des bus identiques de transmission de données de départ, selon la même représentation en parallèle, et dans lequel pour les opérations de commutation, il est prévu à l'intérieur du champ de couplage une cadence propre d'exploration de ce champ, caractérisé par le fait que, pour obtenir une coïncidence entre les suites d'impulsions de cadence d'exploration présentes au niveau des sorties du champ de couplage et des entrées du champ de couplage, qui sont respectivement associées à ces sorties, la cadence d'exploration du champ de couplage possède une fréquence d'exploration ($f_K$) qui est supérieure à toutes les fréquences individuelles d'exploration ($f_i$) et que, d'une part, il est prévu, aux entrées du champ de couplage, respectivement une chaîne de mémoires intermédiaires d'entrée (E1, E2...), à chacune desquelles est associé un circuit comparateur de cadence (V1, V2...) servant à produire respectivement un signal d'interférence (I1, I2...), qui est une mesure de la différence de phase ou de fréquence entre la fréquence individuelle d'exploration ($f_{i1}$, $f_{i2}$) et la fréquence ($f_K$) d'exploration du champ de couplage, les signaux d'interférence étant transmis sous forme codée pendant les périodes d'exploration du champ de couplage, qui ne sont pas nécessaires pour la transmission de données audio et qui sont obtenues sur la base de la fréquence ($f_K$) d'exploration du champ de couplage, accrue par rapport à toutes les fréquences individuelles d'exploration ($f_i$), et que, d'autre part, il est prévu, au niveau des sorties du champ de couplage, respectivement un circuit de régénération de cadence (R1, R2...) qui est utilisé pour récupérer la fréquence individuelle respective d'exploration ($f_{i1}$, $f_{i2}$) et est commandé en fonction du signal d'interférence associé (I1, I2...), et auquel est associée respectivement une chaîne (A1, A2...) de mémoires intermédiaires de sortie, et que les signaux d'interférence (I1, I2...) sont injectés sous forme codée, à partir des circuits comparateurs de cadence (V1, V2...) présents au niveau des entrées associées du champ de couplage, dans les flux de données aboutissant aux sorties associées du champ de couplage et sont envoyés, après découplage à partir des flux de données situés au niveau des sorties du champ de couplage, aux circuits régénérateurs de cadence (R1, R2...) situés en cet endroit.

2. Champ de couplage suivant la revendication 1, caractérisé par le fait que les emplacements de mémoire prévus pour la mémorisation temporaire des données à l'intérieur du champ de couplage (KF) sont réalisés en étant associés entre eux sous la forme de couples d'emplacements de mémoire, dont les emplacements de mémoire sont occupés alternativement par les données de périodes successives d'exploration de sorte que les données de la période actuelle d'exploration sont enregistrées dans un emplacement de mémoire du couple d'emplacements de mémoire, tandis que simultanément les données de la période d'exploration précédente sont lues à partir de l'autre emplacement de mémoire associé.

FIG 1

FIG 2

"a" ($f_i$)

| D0 | D1 | D2 | D3 | D4 | D5 |
|---|---|---|---|---|---|

"b" ($f_K$)

| D0 | D1 | D2 | D3 | D3 | D4 |
|---|---|---|---|---|---|

"c" (K)

"d" (SP)

"e" (K&SP)

"f"

| D0 | D1 | D2 | D3 | Tx | D4 |
|---|---|---|---|---|---|

FIG 3

FIG 4